(19) Europäisches Patentamt / European Patent Office / Office européen des brevets

(11) **EP 4 036 541 A1**

(12) **EUROPEAN PATENT APPLICATION**

(43) Date of publication:
03.08.2022 Bulletin 2022/31

(21) Application number: 22153012.4

(22) Date of filing: 24.01.2022

(51) International Patent Classification (IPC):
*G01K 7/01* (2006.01)    *G01K 15/00* (2006.01)

(52) Cooperative Patent Classification (CPC):
G01K 7/01; G01K 15/00; G01K 15/005

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 27.01.2021 US 202117159956

(71) Applicant: NXP B.V.
5656 AG Eindhoven (NL)

(72) Inventors:
• van Veldhoven, Robert
5656AE Eindhoven (NL)
• Xia, Sha
5656ae Eindhoven (NL)

(74) Representative: Hardingham, Christopher Mark
NXP Semiconductors
Intellectual Property Group
Abbey House
25 Clarendon Road
Redhill, Surrey RH1 1QZ (GB)

(54) **CALIBRATION AND TEMPERATURE SENSING ON INTEGRATED CIRCUIT CHIP**

(57) An integrated circuit (IC) chip includes a first temperature sensor of a first type and a second temperature sensor of a second type that differs from the first type. A method implemented in the IC chip entails calibrating the second temperature sensor utilizing the first temperature sensor and following the calibrating operation, sensing a temperature of the IC chip utilizing the second temperature sensor. The first temperature sensor may be a bipolar junction transistor-based temperature sensor configured to undergo a voltage calibration. Alternatively, the first temperature sensor may be a thermal-diffusivity-based temperature sensor. The second temperature sensor may be a low power consumption sensor relative to the first temperature sensor, and the first temperature sensor may be powered off following calibration of the second temperature sensor.

FIG. 3

EP 4 036 541 A1

**Description**

**TECHNICAL FIELD OF THE INVENTION**

The present invention relates generally to temperature sensing in an integrated circuit (IC) chip. More specifically, the present invention relates to calibration of a temperature sensor on an IC chip.

**BACKGROUND OF THE INVENTION**

Temperature has a significant impact on electronic devices. It can affect both the system performance and the expected life of such electronic devices. Furthermore, issues related to temperature can increase with the increasingly dense circuitry and reductions in package size. As such, measuring the temperature within an electronic device or system can allow an electronic device or system to compensate for the effects of temperature and/or to mitigate issues related to overheating of a device. Thus, many electronic devices and systems include one or more temperature sensors incorporated therein to quantify the temperature of the surrounding environment. Integrated temperature sensors based on CMOS technology have been developed to fulfill the function of temperature sensing in small devices in which area and power consumption are limited.

**SUMMARY**

Aspects of the disclosure are defined in the accompanying claims.

In a first aspect, there is provided An integrated circuit (IC) chip comprising a first temperature sensor of a first type and a second temperature sensor of a second type that differs from the first type, wherein the first temperature sensor is configured to be utilized to calibrate the second temperature sensor and the second temperature sensor is configured to be utilized for temperature sensing following calibration.

In a second aspect, there is provided a method implemented in an integrated circuit (IC) chip, the IC chip including a first temperature sensor of a first type and a second temperature sensor of a second type that differs from the first type, the method comprising calibrating the second temperature sensor utilizing the first temperature sensor and following the calibrating operation, sensing a temperature of the IC chip utilizing the second temperature sensor.

In a third aspect, there is provided an integrated circuit (IC) chip comprising a first temperature sensor of a first type characterized by a first operational voltage and a second temperature sensor of a second type that differs from the first type, the second type being characterized by a second operational voltage that is less than the first operational voltage, wherein the first temperature sensor is configured to be utilized to calibrate the second temperature sensor, the first temperature sensor is configured to be powered off following calibration, and the second temperature sensor is configured to be utilized for temperature sensing following calibration. In one or more embodiments, during calibration, the first temperature sensor is configured to determine a first current temperature of the IC chip and the second temperature sensor is configured to determine a second current temperature of the IC chip; and the IC chip further comprises a processing element electrically connected to each of the first and second temperature sensors, the processing element being configured to determine a difference between the first and second current temperatures, the difference being used to determine a calibration parameter for the second temperature sensor. In one or more embodiments, the first temperature sensor comprises a bipolar junction transistor-based (BJT-based) temperature sensor configured to undergo a voltage calibration to determine the first current temperature of the IC chip. In one or more embodiments, the second temperature sensor comprises a thermal-diffusivity-based temperature sensor configured to obtain a direct measurement of the first current temperature of the IC chip to determine the first current temperature.

**BRIEF DESCRIPTION OF THE DRAWINGS**

The accompanying figures in which like reference numerals refer to identical or functionally similar elements throughout the separate views, the figures are not necessarily drawn to scale, and which together with the detailed description below are incorporated in and form part of the specification, serve to further illustrate various embodiments and to explain various principles and advantages all in accordance with the present invention.

FIG. 1 shows a block diagram of an integrated circuit (IC) chip in accordance with an embodiment;
FIG. 2 shows a block diagram of an integrated circuit (IC) chip in accordance with another embodiment;
FIG. 3 shows a flowchart of a temperature sensing process implemented in connection with either of the IC chips of FIGs. 1 and 2 in accordance with another embodiment.

**DETAILED DESCRIPTION**

In overview, the present disclosure concerns integrated circuit (IC) chips having temperature sensors included therein and methodology for calibration and temperature sensing utilizing the temperature sensors. More particularly, an IC chip includes two temperature sensors of differing types. A first temperature sensor of one type is utilized to calibrate the second temperature sensor of another type. Following calibration, the first temperature sensor may be powered off and the second temperature sensor is utilized for temperature sensing. In some embodiments, the first temperature sensor may be a bipolar junction transistor-based (BJT-based) temperature sensor configured to undergo voltage calibration, and in other embodiments, the first temperature sensor may be a high accuracy thermal-diffusivity-based temperature sensor. The second temperature sensor utilized for temperature sensing may be any of a variety of temperature sensors suited for ultra-low-voltage operation. Thus, an accurate temperature sensor that may have a relatively high power consumption may be utilized to calibrate a lower-power temperature sensor. In some embodiments, calibration may be performed in a tester and in other embodiments, calibration may be performed as a background process during operation of the IC chip. In either instance, calibration accuracy may be increased and/or test time may be significantly decreased for improved efficiency and cost savings.

The instant disclosure is provided to explain in an enabling fashion at least one embodiment in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

Much of the inventive functionality and many of the inventive principles are best implemented with or in integrated circuits (ICs) including possibly application specific ICs or ICs with integrated processing or control or other structures. It is expected that one of ordinary skill, notwithstanding possibly significant effort and many design choices motivated by, for example, available time, current technology, and economic considerations, when guided by the concepts and principles disclosed herein will be readily capable of generating such ICs and structures with minimal experimentation. Therefore, in the interest of brevity and minimization of any risk of obscuring the principles and concepts according to the present invention, further discussion of such structures and ICs, if any, will be limited to the essentials with respect to the principles and concepts of the various embodiments.

It should be understood that the use of relational terms, if any, such as first and second, top and bottom, and the like are used solely to distinguish one from another entity or action without necessarily requiring or implying any actual such relationship or order between such entities or actions.

Temperature sensors often include a sensor that produces temperature dependent voltages and an analog-to-digital converter (ADC) that converts a ratio of the temperature dependent voltages to a digital output. During the integrated circuit (IC) fabrication process of a temperature sensor, process inconsistencies may occur that cause variability in the device parameters of the sensor (referred to as process spread) or plastic packaging may increase mechanical stress on the sensor's die and also cause variability, referred to as packaging shift. Such variability affects the initial inaccuracy of an uncalibrated temperature sensor, which may be as great as $\pm 2.0°C$ at room temperature. However, in a number of applications, requirements call for these temperature sensors to be calibrated to achieve better accuracy, for example, better than $\pm 1.0°C$.

The calibration of temperature sensors is nontrivial, especially in an industrial manufacturing process. One conventional approach includes using thermal calibration to trim the temperature sensor, which usually requires comparing a reading of the sensor with a reading of a reference thermometer of known accuracy at the same temperature as the sensor, and then adjusting a trim value. This approach usually requires bringing the sensor (or a batch of sensors) and the thermometer into good thermal contact using a thermally-conducting medium, such as a metal block (e.g., chuck) or a liquid bath, where a thermal equilibrium may be obtained after a minutes-long wait time. For example, achieving a stable temperature may require the sensors to be in an oven for minutes at a time, increasing calibration costs in both time and money. Additionally, due to thermal inertia, thermal calibration may also introduce error as large as, for example, several degrees Celsius because of poor heat distribution on the thermally-conducting medium (e.g., chuck). Performing additional trimming operations at different temperatures requires an even longer wait time and additional infrastructure, which further complicates the trimming operations. Accordingly, there are significant challenges in accurately applying heat and accurately measuring the temperature during a thermal calibration process.

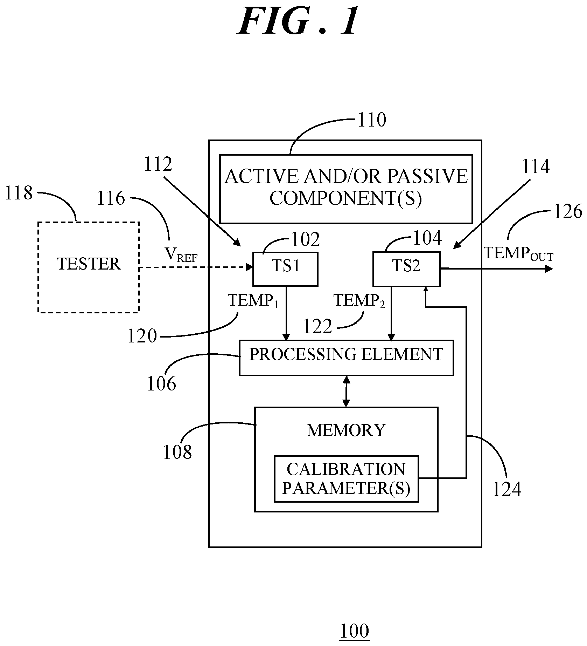

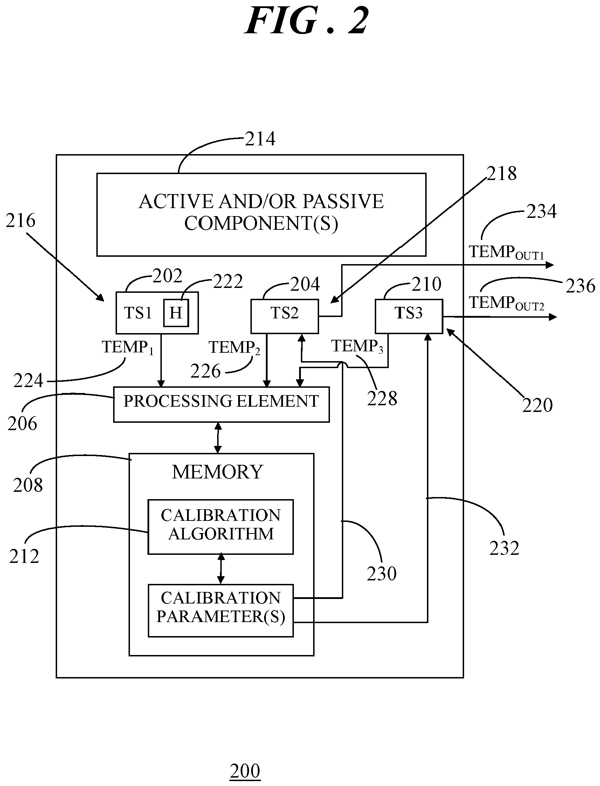

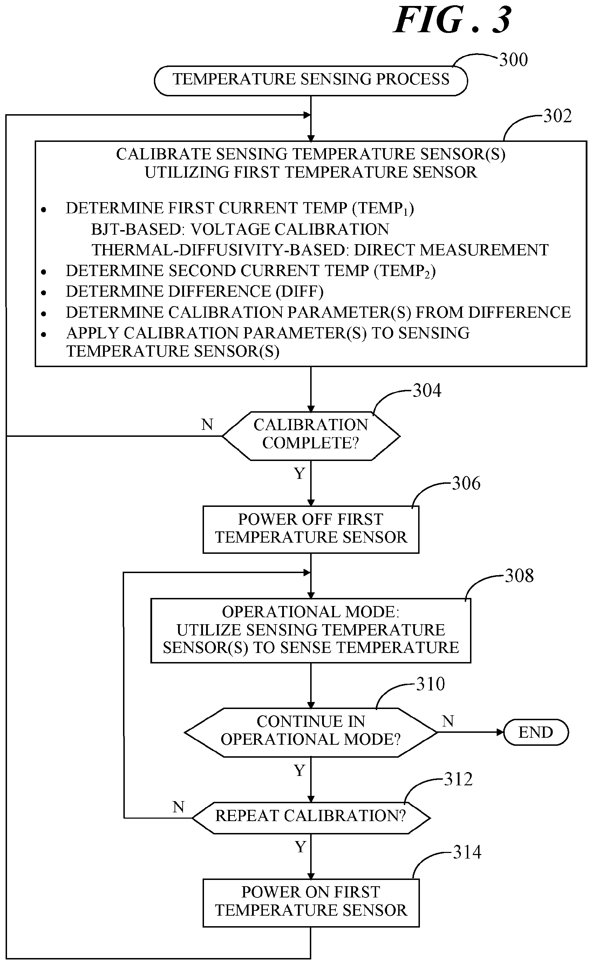

Embodiments discussed in connection with FIGs. 1 and 2 include IC chips that include two temperature sensors of differing types located in close proximity to one another. As will be discussed in significantly greater detail below, a first temperature sensor is utilized to calibrate a second temperature sensor without performing a thermal calibration process. Following calibration, the first temperature sensor can be powered off and the second temperature sensor can be utilized for temperature sensing. An embodiment discussed in connection with FIG. 3 provides calibration methodology for calibrating the second temperature sensor of either of the IC chips of FIGs. 1 and 2, as well as temperature sensing in an operational mode utilizing the second temperature sensor.

Referring to FIG. 1, FIG. 1 shows a block diagram of an integrated circuit (IC) chip 100 in accordance with an embodiment. IC chip 100 includes a first temperature sensor 102 (labeled TS1), a second temperature 104 (labeled TS2), a processing element 106 electrically connected to each of the first and second temperatures sensors 102, 104, and a memory element 108 associated with processing element 106. IC chip 100 may be a stand-alone temperature sensing IC chip that may be incorporated at a suitable location within a larger electronic device or system (not shown). Alternatively, the elements of IC chip 100 may be incorporated into a packaged electronic device that further includes any suitable variety of active and/or passive components, as represented by a block 110, for performing a function. Temperature sensing may be useful in any type of circuit that generates significant heat, such as a radar transceiver, a microcontroller, and so forth. The temperature information can be used to compensate for a temperature coefficient, to send out a warning when the temperature has crossed a certain threshold, and so forth.

In accordance with an embodiment, first temperature sensor 102 is utilized to calibrate second temperature sensor 104. Following calibration, first temperature sensor 102 may be powered off and second temperature sensor 104 is utilized for temperature sensing. First and second temperature sensors 102, 104 may be physically close to one another in IC chip 100. By way of example, first temperature sensor 102 is at a first location 112 within IC chip 100 and second temperature sensor 104 is at a second location 114 within IC chip 100 in which first and second locations 112, 114 are physically close enough to one another such that an ambient temperature at each of first and second locations 112, 114 is generally equivalent. The closer that first and second temperature sensors 102, 104 are to one another (e.g., within 1mm of one another), the greater the probability that they are experiencing the same environmental temperature. Alternatively, since a silicon substrate is a good thermal conductor, a larger distance may be acceptable if other circuits within IC chip 100 are shut down during calibration so that they do not cause a temperature gradient. Regardless, it can be assumed that the same temperature would be sensed at respective first and second temperature sensors 102, 104 which is useful during calibration.

First and second temperature sensors 102, 104 operate under different principles, referred to herein as types. In accordance with some embodiments, first temperature sensor 102 may be a sensor of a first type, such as a bipolar junction transistor-based (BJT-based) temperature sensor. First temperature sensor 102 may therefore be referred to herein as BJT-based temperature sensor 102. Second temperature sensor 104 may be a sensor of a second type that is suited for ultra-low-voltage (e.g., less than IV) operation. Such temperature sensors can be, for example, resistor-based, capacitor-based, DTMOS-based (dynamic threshold metal oxide semiconductor-based), thermal-diffusivity-based, or another principle or type. Second temperature sensor 104 may generally be referred to herein as sensing temperature sensor 104 since it may be any of a variety of types of temperature sensors and, regardless of the type, is utilized for sensing temperature within IC chip 100 during normal operational use.

BJT-based temperature sensors are often used in electronic equipment because they can be included in a silicon integrated circuit (IC) at a relatively low cost. The principle of the sensor is that the forward voltage of a silicon diode, which may be the base-emitter junction of a bipolar junction transistor (BJT), is temperature dependent. A BJT-based temperature sensor is biased by a current source, and the voltage between its base and emitter ($V_{BE}$) is given as follows:

$$V_{BE} = \frac{kT}{q} ln \frac{I_C}{I_S} \tag{1}$$

where k is the Boltzman Constant, T is the absolute temperature, q is the electron charge, $I_C$ is the bias current and $I_S$ is the saturation constant, with the saturation constant being strongly process-dependent.

$V_{BE}$ is a non-linear function of temperature. Furthermore, process spread may cause larger errors in $V_{BE}$ due to variations in $I_C$ and $I_S$. Therefore, $V_{BE}$ is not suitable as a sensing signal. To eliminate the process error, the difference between the two voltages between base and emitter ($V_{BE}$s) is determined. This difference, $\Delta V_{BE}$, is given by:

$$\Delta V_{BE} = V_{BE2} - V_{BE1} = \frac{kT}{q} ln \frac{I_{C1}}{I_{C2}} - \frac{kT}{q} ln(p) \tag{2}$$

As a result, the process-dependent saturation constant, $I_S$, is canceled out and $\Delta V_{BE}$ can be determined by the ratio of the two currents, which can be made quite accurate. Ideally, $\Delta V_{BE}$ is proportional to the absolute temperature (PTAT). A BJT-based temperature sensor, can be calibrated utilizing a voltage calibration process instead of a thermal calibration process. Voltage calibration entails applying an accurate external reference voltage (in lieu of $V_{BE}$) and determining the value of $\Delta V_{BE}$ based on digital output of the BJT-based temperature sensor. In voltage calibration, the difference between the two $V_{BE}$ voltages (e.g., $\Delta V_{BE}$) can be made very accurate and can be used to measure the temperature of a die during calibration. As will be discussed in greater detail below, in FIG. 1, an external reference voltage 116, labeled $V_{REF}$, may be applied via a tester 118 during a voltage calibration process in order to calibrate BJT-based temperature sensor 102.

A voltage calibration technique has a number of advantages. For example, in a single temperature trim, the $\Delta V_{BE}$ can be used to determine the temperature of IC chip 100 to be calibrated. Therefore, no externally applied temperature needs to be provided by a heater. Accordingly, voltage calibration speeds up the calibration process by orders of magnitude, thereby saving in calibration costs. Furthermore, since the $\Delta V_{BE}$ can be read per chip, heat distribution on the chuck becomes irrelevant as it will be calibrated out.

However, BJT-based temperature sensors may not be suitable for ultra-low-voltage operations because $V_{BE}$ can be as high as 900 millivolts at temperatures lower than -40°C, thereby limiting their application in advanced technology nodes. That is, BJT-based temperature sensor 102 my be characterized by an operational voltage that is greater than the operational voltage of sensing temperature sensor 104. On the other hand, alternative temperature sensors, such as sensing temperature sensor 104, that rely on other sensing techniques may be implemented in applications calling for ultra-low-voltage operations and can have suitable accuracy. Unfortunately, calibration of those temperature sensors, such as sensing temperature sensor 104, is limited to thermal calibration.

In accordance with some embodiments, BJT-based temperature sensor 102 is combined with sensing temperature sensor 104 of a different type to effectively enable voltage calibration for temperature sensors (such as to second temperature sensor 104) that are more suitable for ultra-low-voltage operations. During voltage calibration (discussed in greater detail in connection with FIG. 3), reference voltage 116 is provided to BJT-based temperature sensor 102. Reference voltage 116 is compared to $\Delta V_{BE}$ of BJT-based temperature sensor 102, which is subsequently translated into a first current temperature 120 (labeled $TEMP_1$) of IC chip 100 by BJT-based temperature sensor 102. First current temperature 120 is an accurate estimation of the temperature of IC chip 100. Immediately thereafter, sensing temperature sensor 104 will measure a second current temperature 122 (labeled $TEMP_2$) of IC chip 100. The difference of the two measurement results from BJT-based temperature sensor 102 and sensing temperature sensor 104 (e.g., the difference between first and second current temperatures 120, 122) can be used as information to calibrate sensing temperature sensor 104. In an example, the difference may be used to determine calibration parameters 124, or trim values, for sensing temperature second 104 that may be stored, for example, in memory element 108. These calibration parameters 124 can then be communicated to sensing temperature sensor 104.

Following calibration, BJT-based temperature sensor 102 can be powered down and with calibration parameters 124 applied, temperature sensing of IC chip 100 utilizing sensing temperature sensor 104 can be performed. That is, sensing temperature sensor 104 can thereafter output a calibrated output temperature 126 (labeled $TEMP_{OUT}$) that accurately represents the current temperature of IC chip 100 at second location 114 or at a location at which IC chip 100 is positioned within a larger system.

The inclusion of BJT-based temperature sensor 102 within IC chip 100 is advantageous for calibrating sensing temperature sensor 104 since voltage calibration can be performed in lieu of a thermal calibration process. Thus, voltage calibration can be performed in the absence of a temperature-controlled environment and an external temperature reference, thereby yielding calibration time savings, power savings, and potential inaccuracies due to the application of heat and poor heat distribution. More particularly and in accordance with the above described embodiment, BJT-based temperature sensor 102 can be utilized to enable voltage calibration for temperature sensors (e.g., sensing temperature sensor 104) that do not support voltage calibration. However, voltage calibration using BJT-based temperature sensor 102 calls for external reference voltage 116 provided by tester 118 during, for example, final test of IC chip 100 to yield high accuracy calibration. As such, sensing temperature sensor 104 cannot be calibrated during operational use of IC chip 100.

Some configurations may call for periodic recalibration during operational use of the sensing temperature sensor or sensors. Besides accuracy, a temperature sensor's size and power consumption, and its ability to operate at a low supply voltage may also be important. A BJT-based temperature sensor is typically the most accurate type of on-chip temperature sensor. However, a BJT-based temperature sensor is relatively large, has moderate instead of low power consumption, and is not suited for low supply voltage operation.

Referring now to FIG. 2, FIG. 2 shows a block diagram of an integrated circuit (IC) chip 200 in accordance with another embodiment. IC chip 100 includes a first temperature sensor 202 (labeled TS1), a second temperature 204 (labeled TS2), a processing element 206 electrically connected to each of the first and second temperatures sensors 202, 204, and a memory element 208 associated with processing element 206. In some embodiments, IC chip 200 may include additional temperature sensors, as demonstrated by a third temperature sensor 210. Like IC chip 100 (FIG. 1), IC chip 200 may be a stand-alone temperature sensing IC chip that may be incorporated at a suitable location within a larger electronic device or system (not shown). Alternatively, the elements of IC chip 200 may be incorporated into a packaged electronic device that further includes any suitable variety of active and/or passive components, as represented by a block 214, for performing a function.

In accordance with the illustrated an embodiment, first temperature sensor 202 is utilized to calibrate both of second and third temperature sensors 204, 210. Following calibration, first temperature sensor 202 may be powered off and second and third temperature sensors 204, 210 may be utilized for temperature sensing. First, second, and third temperature sensors 202, 204, 210 may be physically close to one another in IC chip 200. By way of example, first temperature sensor 202 is at a first location 216 within IC chip 200, second temperature sensor 204 is at a second location 218 within IC chip 200, and third temperature sensor 210 is at a third location 220 within IC chip 200 in which first, second, and third locations 216, 218, 220 are physically close enough to one another such that an ambient temperature at each of first, second, and third locations 216, 218, 220 is generally equivalent. Alternatively, first, second, and third temperature sensors 202, 204, 210 may be located relatively far apart from one another to monitor hotspots scattered at different places, as will be discussed in greater detail below.

First temperature sensor 202 operates under a different principle from second and third temperature sensors 204, 210. That is, first temperature sensor 202 may be a sensor of a first type, such as a thermal-diffusivity-based temperature sensor. As such, first temperature sensor may therefore be referred to herein as thermal-diffusivity-based temperature sensor 202. Second and third temperature sensors 204, 210 may be sensor of a second type that is suited for ultra-low-voltage (e.g., less than IV) operation. Resistor-based temperature sensors may be an advantageous option for second and third temperature sensors 204, 210 since they make use of the same type of readout circuit as does thermal-diffusivity-based temperature sensor 202. Further, both thermal-diffusivity-based temperature sensors and resistor-based temperature sensors can work with ultra-low supply voltages making them well suited for advance technology nodes. Nevertheless, other temperature sensor types may alternatively be used for second and third temperature sensors 204, 210 such as capacitor-based, DTMOS-based (dynamic threshold metal oxide semiconductor-based), a BJT-based temperature sensor (in lieu of voltage calibration) or another principle or type. Second and third temperature sensors 204, 210 may generally be referred to herein as sensing temperature sensors 204, 210 since they may be any of a variety of types of temperature sensors and, regardless of the type, they are utilized for sensing temperature within IC chip 200 during normal operational use.

Temperature sensors based on measuring thermal diffusivity of silicon to measure the temperature (e.g., thermal-diffusivity-based temperature sensor 202) can achieve acceptable accuracy without the need for individual calibration because the thermal diffusivity of silicon is a very weak function of process variation. However, a thermal-diffusivity-based temperature sensor typically includes an integrated heater (e.g., heater 222). Unfortunately, thermal-diffusivity-based temperature sensors are not prevalent for temperature sensing in low power chips and systems because the power consumed by the integrated heater (e.g., heater 222) results in an undesirably high power consumption by the thermal-diffusivity-based temperature sensor. Duty-cycling a thermal-diffusivity-based temperature sensor can help reduce the average power dissipation. However, a consequence is a reduction in the update speed of the temperature sensor.

In accordance with the embodiment of FIG. 2, background calibration may be implemented in temperature sensors without utilizing a tester (e.g., tester 118). In particular, thermal-diffusivity-based temperature sensor 202 may be used as an on-chip reference temperature sensor to calibrate one or more low-power temperature sensors, e.g., sensing temperature sensors 204, 210. Furthermore, both thermal-diffusivity-based temperature sensors and, for example, resistor-based temperature sensors have a very small silicon footprint, thereby making the combination of both very appealing. In an example, a thermal-diffusivity-based temperature sensor may be approximately 1650 mm$^2$, while a resistor-based temperature sensor may be approximately 5800 mm$^2$.

Background calibration may be performed by executing a calibration algorithm 212 stored in memory 208. During calibration, a first current temperature 224 (labeled $TEMP_1$) of IC chip 200 is measured by thermal-diffusivity-based temperature sensor 202. First current temperature 224 is an accurate estimation of the temperature of IC chip 200. Immediately thereafter, sensing temperature sensor 204 can measure a second current temperature 226 (labeled $TEMP_2$) of IC chip 200 and sensing temperature sensor 210 will measure a third current temperature 228 (labeled $TEMP_3$). The difference of the two measurement results from thermal-diffusivity-based temperature sensor 202 and sensing temperature sensor 204 (e.g., the difference between first and second current temperatures 224, 226) can be used as information to calibrate sensing temperature sensor 204. In an example, the difference may be used to determine calibration parameters 230, or trim values, for sensing temperature sensor 204 that may be stored, for example, in memory element 208. These calibration parameters 230 can then be communicated to sensing temperature sensor 204. Similarly, the difference of the two measurement results from thermal-diffusivity-based temperature sensor 202 and sensing temperature sensor 210 (e.g., the difference between first and third current temperatures 224, 228) can be used as information to calibrate sensing temperature sensor 210. In an example, the difference may be used to determine calibration parameters 232, or trim values, for sensing temperature sensor 210 that may be stored, for example, in memory element 208. These calibration parameters 232 can then be communicated to sensing temperature sensor 210.

Following calibration, thermal-diffusivity-based temperature sensor 202 can be powered down and with calibration parameters 230, 232 applied, temperature sensing of IC chip 200 utilizing sensing temperature sensors 204, 210 can be performed. That is, sensing temperature sensor 204 can thereafter output a calibrated output temperature 234 (labeled $TEMP_{OUT1}$) that accurately represents the current temperature of IC chip 200 at second location 218 or a location at which IC chip 200 is positioned within a larger system. Likewise, sensing temperature sensor 210 can thereafter output a calibrated output temperature 236 (labeled TEMP$_{OUT2}$) that accurately represents the current temperature of IC chip 200 at third location 220 or a location at which IC chip 200 is positioned within a larger system.

The inclusion of thermal-diffusivity-based temperature sensor 202 within IC chip 200 may be advantageous for calibrating sensing temperature sensors 204, 210 since thermal-diffusivity-based temperature sensor 202 does not need to be individually calibrated by an external tester to be accurate and no heat needs to be provided by an external heater to calibrate thermal-diffusivity-based temperature sensor 202. Thus, thermal-diffusivity-based temperature sensor 202 can be used as an on-chip reference temperature sensor so that an external tester is not required. As such, background calibration can be performed efficiently and from time to time, for instance each time IC chip 200 starts up. Thermal-diffusivity-based temperature sensor 202 may be used only during the background calibration process to obtain the instantaneous temperature of IC chip 200 for the purpose of calibrating sensing temperature sensors 204, 210. After background calibration and during normal operation, thermal-diffusivity-based temperature sensor 202 can be powered down to save power. Still further, both types of temperature sensors can be made extremely small so that the area impact of combining multiple sensors of varying types is not significant.

In some embodiments, a combined sensor may be limited to a one to one relationship, such as one thermal-diffusivity-based temperature sensor and one sensing temperature sensor. However, a combined sensor does not need to be limited to a one to one relationship. As shown in the example above, one accurate thermal-diffusivity-based temperature sensor (e.g., thermal-diffusivity-based temperature sensor 202 ) can be combined with one or multiple small sensing temperature sensors (e.g., sensing temperature sensors 204, 210) across a large IC chip or system to monitor for hotspots. In such a situation, calibration may be performed under conditions in which the temperature over the IC chip can still be considered to be the same, such as for instance during IC chip startup or in a tester.

FIG. 3 shows a flowchart of a temperature sensing process 300 implemented in connection with either of IC chips 100, 200 (FIGs. 1 and 2) in accordance with another embodiment. For simplicity, temperature sensing process 300 collectively describes both calibration of the sensing temperature sensors as well as sensing during normal or operational use. Calibration may be performed as a background process during operational use, as mentioned above in connection with IC chip 200 (FIG. 2). Alternatively, calibration may be performed as a process that is separate from sensing, as mentioned above in connection with IC chip 100 (FIG. 1). For example, calibration may be performed during final test prior to the IC chip being placed in an intended operational environment.

At a block 302, the sensing temperature sensors are calibrated utilizing the first temperature sensor. In the embodiment of FIG. 1, first current temperature 120 is determined in response to voltage calibration of BJT-based temperature sensor 102, second current temperature 122 is determined by measurement at sensing temperature sensor 104, and a difference (DIFF) of first and second current temperatures 120, 122 is determined. Thereafter, calibration parameters 124 may be determined from the difference and calibration parameters 124 are applied to sensing temperature sensor 104. In the embodiment of FIG. 2, first current temperature 224 is determined by direction measurement via thermal-diffusivity-based temperature sensor 202, second current temperature 226 is determined by measurement at sensing temperature sensor 204, and a difference of first and second current temperatures 224, 226 is determined. Thereafter, calibration parameters 230 may be determined from the difference and calibration parameters 230 are applied to sensing temperature sensor 204. In a configuration that includes additional sensing temperature sensors, the additional sensing temperature sensors may also be calibrated using thermal-diffusivity-based temperature sensor 202. In this example, third current temperature 228 is determined by measurement at sensing temperature sensor 210 and a difference of first and third current temperatures 224, 228 is determined. Thereafter, calibration parameters 232 may be determined from the difference and calibration parameters 232 are applied to sensing temperature sensor 210.

Process 300 continues with a query block 304. At query block 304, a determination is made as to whether calibration is complete. When calibration is not complete, process control may loop back to block 302 to repeat calibration. However, when a determination is made at query block 304 that calibration is complete, process control continues with a block 306.

At block 306, the first temperature sensor (e.g., BJT-based temperature sensor 102, FIG. 1, or thermal-diffusivity-based temperature sensor 204, FIG. 2) is powered off. Accordingly, power savings can be achieved. At a block 308, the IC chip (e.g., first or second IC chip 100, 200) is placed in operational mode. That is, the associated sensing temperature sensor(s) is/are utilized to sense temperature at a location within their associated IC chip.

At a query block 310, a determination is made as to whether the IC chip is to continue in the operational mode. When the operational mode is to continue, process control may proceed with a query block 312.

At query block 312, a determination is made as to whether the calibration process is to be repeated. When the calibration process is not to be repeated (e.g., the configuration of FIG. 1), process control loops back to block 308 to remain in the operational mode. However, as discussed above, the configuration of FIG. 2 can allow for background calibration while IC chip 200 is in the operational mode. Hence, if a determination is made at query block 312 that calibration is to be repeated, process control continues at a block 314. At block 314, the first temperature sensor (e.g., thermal-diffusivity-based temperature sensor 204, FIG. 2) is powered on. Thereafter, process control loops back to block 302 to calibrate sensing temperature sensors 204, 210 during a background calibration process.

Returning to query block 310, the operational mode of the IC chip (IC chip 100 or IC chip 200) may be discontinued when, for example, the IC chip is powered down or otherwise signaled to terminate temperature sensing. When the operational mode is to be discontinued, execution of temperature sensing process 300 ends.

Thus, execution of the temperature sensing process described herein enables utilization of a first temperature sensor of one type integrated into an IC chip to accurately calibrate a second temperature sensor of another type that is also integrated into the IC chip. Thereafter, the second temperature sensor can be utilized for temperature sensing. It should be understood that certain ones of the process blocks depicted in FIG. 3 may be performed in parallel with each other or with performing other processes. In addition, the particular ordering of the process blocks depicted in FIG. 3 may be modified while achieving substantially the same result. Accordingly, such modifications are intended to be included within the scope of the inventive subject matter.

Embodiments described herein entail integrated circuit (IC) chips having temperature sensors included therein and methodology for calibration and temperature sensing utilizing the temperature sensors. More particularly, an IC chip includes two temperature sensors of differing types. A first temperature sensor of one type is utilized to calibrate the second temperature sensor of another type. Following calibration, the first temperature sensor may be powered off and the second temperature sensor is utilized for temperature sensing. In some embodiments, the first temperature sensor may be a bipolar junction transistor-based (BJT-based) temperature sensor configured to undergo voltage calibration, and in other embodiments, the first temperature sensor may be a high accuracy thermal-diffusivity-based temperature sensor. The second temperature sensor utilized for temperature sensing may be any of a variety of temperature sensors suited for ultra-low-voltage operation. Thus, an accurate temperature sensor that may have a relatively high power consumption may be utilized to calibrate a lower-power temperature sensor. In some embodiments, calibration may be performed in a tester and in other embodiments, calibration may be performed as a background process during operation of the IC chip. In either instance, calibration accuracy may be increased and/or test time may be significantly decreased for improved efficiency and cost savings.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

## Claims

1. An integrated circuit, IC, chip comprising:

   a first temperature sensor of a first type; and
   a second temperature sensor of a second type that differs from the first type, wherein the first temperature sensor is configured to be utilized to calibrate the second temperature sensor and the second temperature sensor is configured to be utilized for temperature sensing following calibration.

2. The IC chip of claim 1 wherein:

   the first type of the first temperature sensor is **characterized by** a first operational voltage; and
   the second type of the second temperature sensor is **characterized by** a second operational voltage that is less than the first operational voltage.

3. The IC chip of claim 1 or 2 wherein:

   the first temperature sensor is at a first location within the IC chip; and
   the second temperature sensor is at a second location within the IC chip, the first and second locations being close enough to one another such that an ambient temperature at each of the first and second locations is equivalent.

4. The IC chip of any preceding claim wherein the first temperature sensor is configured to be powered off following calibration.

**5.** The IC chip of any preceding claim wherein:

during calibration, the first temperature sensor is configured to determine a first current temperature of the IC chip and the second temperature sensor is configured to determine a second current temperature of the IC chip; and
the IC chip further comprises a processing element electrically connected to each of the first and second temperature sensors, the processing element being configured to determine a difference between the first and second current temperatures, the difference being used to determine a calibration parameter for the second temperature sensor.

**6.** The IC chip of claim 5 wherein during calibration the first and second current temperatures are determined in the absence of a temperature-controlled environment and an external temperature reference.

**7.** The IC chip of claim 5 or 6 wherein the first temperature sensor comprises a bipolar junction transistor-based, BJT-based, temperature sensor configured to undergo a voltage calibration to determine the first current temperature of the IC chip.

**8.** The IC chip of claim 7 wherein the BJT-based temperature sensor is configured to be connected to an external tester for provision of an external reference voltage to the BJT-based temperature sensor during voltage calibration.

**9.** The IC chip of any of claims 5 to 8 wherein the second temperature sensor comprises a thermal-diffusivity-based temperature sensor configured to obtain a direct measurement of the first current temperature of the IC chip to determine the first current temperature.

**10.** The IC chip of claim 9 wherein the thermal-diffusivity-based temperature sensor is configured to be powered off following calibration, and the thermal-diffusivity-based temperature sensor is further configured to be periodically powered on to perform calibration during normal operation of the IC chip.

**11.** The IC chip of any preceding claim further comprising a third temperature sensor of a third type that differs from the first type of the first temperature sensor, wherein the first temperature sensor is further configured to be utilized to calibrate the third temperature sensor and the third temperature sensor is configured to be utilized for temperature sensing following calibration.

**12.** A method implemented in an integrated circuit (IC) chip, the IC chip including a first temperature sensor of a first type and a second temperature sensor of a second type that differs from the first type, the method comprising:

calibrating the second temperature sensor utilizing the first temperature sensor; and
following the calibrating operation, sensing a temperature of the IC chip utilizing the second temperature sensor.

**13.** The method of claim 12 wherein the first type of the first temperature sensor is **characterized by** a first operational voltage, and the second type of the second temperature sensor is **characterized by** a second operational voltage that is less than the first operational voltage, and the method further comprising discontinuing power to the first temperature sensor following the calibrating operation.

**14.** The method of claim 12 or 13 wherein the calibrating operation comprises:

determining a first current temperature of the IC chip at the first temperature sensor;
determining a second current temperature of the IC chip at the second temperature sensor;
determining a difference between the first and second current temperatures at a processing element electrically connected to each of the first and second temperature sensors; and
utilizing the difference to determine a calibration parameter for the second temperature sensor.

**15.** The method of claim 14 wherein a one of (i) the first temperature sensor comprises a bipolar junction transistor-based (BJT-based) temperature sensor, and the determining the first current temperature comprises performing a voltage calibration to determine the first current temperature of the IC chip; and (ii) the first temperature sensor comprises a thermal-diffusivity-based temperature sensor, and the determining the first current temperature comprises obtaining a direct measurement of the first current temperature at the thermal-diffusivity-based temperature sensor.

# FIG . 1

110

112

118

116

ACTIVE AND/OR PASSIVE
COMPONENT(S)

114

126

102

104

$V_{REF}$

TESTER

TS1

TS2

$TEMP_{OUT}$

$TEMP_1$

$TEMP_2$

120

122

PROCESSING ELEMENT

106

MEMORY

108

CALIBRATION
PARAMETER(S)

124

100

# FIG . 2

ACTIVE AND/OR PASSIVE
COMPONENT(S)

TS1  H

TS2

TS3

TEMP$_{OUT1}$

TEMP$_{OUT2}$

TEMP$_1$

TEMP$_2$

TEMP$_3$

PROCESSING ELEMENT

MEMORY

CALIBRATION
ALGORITHM

CALIBRATION
PARAMETER(S)

200

# FIG. 3

TEMPERATURE SENSING PROCESS — 300

CALIBRATE SENSING TEMPERATURE SENSOR(S)
UTILIZING FIRST TEMPERATURE SENSOR — 302

- DETERMINE FIRST CURRENT TEMP ($\text{TEMP}_1$)
  BJT-BASED: VOLTAGE CALIBRATION
  THERMAL-DIFFUSIVITY-BASED: DIRECT MEASUREMENT
- DETERMINE SECOND CURRENT TEMP ($\text{TEMP}_2$)
- DETERMINE DIFFERENCE (DIFF)
- DETERMINE CALIBRATION PARAMETER(S) FROM DIFFERENCE
- APPLY CALIBRATION PARAMETER(S) TO SENSING
  TEMPERATURE SENSOR(S)

N ← CALIBRATION COMPLETE? — 304

Y

POWER OFF FIRST TEMPERATURE SENSOR — 306

OPERATIONAL MODE:
UTILIZE SENSING TEMPERATURE
SENSOR(S) TO SENSE TEMPERATURE — 308

CONTINUE IN OPERATIONAL MODE? — 310 → N → END

Y

N ← REPEAT CALIBRATION? — 312

Y

POWER ON FIRST TEMPERATURE SENSOR — 314

Europäisches
Patentamt

European
Patent Office

Office européen
des brevets

## EUROPEAN SEARCH REPORT

Application Number

EP 22 15 3012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/368947 A1 (HURWITZ JONATHAN EPHRAIM DAVID [GB]) 5 December 2019 (2019-12-05) * abstract * * paragraphs [0008], [0040] - [0046], [0055] * * figure 2 * ----- | 1,3-10, 12-15 | INV. G01K7/01 G01K15/00 |
| X | US 2014/140364 A1 (CHARLES GORDON ALEXANDER [US] ET AL) 22 May 2014 (2014-05-22) * abstract * * paragraphs [0003] - [0033], [0057] - [0063] * ----- | 1,3-15 | |

TECHNICAL FIELDS
SEARCHED      (IPC)

G01K

The present search report has been drawn up for all claims

| Place of search | Date of completion of the search | Examiner |
|---|---|---|
| The Hague | 21 June 2022 | Bagnera, Carlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 15 3012

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2022

| Patent document cited in search report | | Publication date | Patent family member(s) | | Publication date |
|---|---|---|---|---|---|
| US 2019368947 | A1 | 05-12-2019 | NONE | | |
| US 2014140364 | A1 | 22-05-2014 | TW | 201428247 A | 16-07-2014 |
| | | | US | 2014140364 A1 | 22-05-2014 |

EPO FORM P0459